# FASCICULE DE BREVET EUROPEEN

(11) **EP 2 900 461 B1**
(45) Date de publication et mention de la délivrance du brevet: **21.02.2024**
(21) Numéro de dépôt: 13785492.3
(22) Date de dépôt: 26.09.2013
(51) Int. Cl.: B29D 11/00, B29C 64/124, B33Y 10/00, G02C 7/02, B29C 64/106, B33Y 40/20

(54) **PROCÉDÉ DE FABRICATION D'UNE LENTILLE OPHTALMIQUE COMPORTANT UNE ÉTAPE DE MARQUAGE POUR RÉALISER DES MARQUES PERMANENTES TECHNIQUES SUR LADITE LENTILLE OPHTALMIQUE**
VERFAHREN ZUR HERSTELLUNG EINER OPHTHALMISCHEN LINSE MIT EINEM MARKIERUNGSSCHRITT ZUR HERSTELLUNG PERMANENTER TECHNISCHER MARKIERUNGEN AUF DIESER OPHTHALMISCHEN LINSE
METHOD FOR MANUFACTURING AN OPHTHALMIC LENS COMPRISING A MARKING STEP FOR PRODUCING PERMANENT TECHNICAL MARKS ON SAID OPHTHALMIC LENS

(30) Priorité: 28.09.2012 FR 1259197
(43) Date de publication de la demande: 05.08.2015
(73) Titulaire: Essilor International, 94220 Charenton-le-Pont (FR)
(72) Inventeur: ANATOLE, Vincent, F-94220 Charenton-le-Pont (FR); PIETRI, Cécile, F-94220 Charenton-le-Pont (FR)
(74) Mandataire: Santarelli
(86) Numéro de dépôt international: PCT/FR2013/052282
(87) Numéro de publication internationale: WO 2014/049284

(56) Documents cités:
- WO-A1-02/087859
- DE-A1-102009 004 377
- US-A- 5 960 550
- US-A1- 2007 115 429

## Description

L'invention concerne les procédés de fabrication de lentilles ophtalmiques comportant une étape de marquage pour réaliser des marques permanentes techniques sur ces lentilles ophtalmiques.

L'invention concerne également une machine de fabrication de telles lentilles ophtalmiques.

On sait que les lentilles ophtalmiques sont soumises à différentes étapes de fabrication. Les procédés de fabrication généralement employés pour obtenir une lentille finie et taillée à la forme d'une monture particulière comportent typiquement des étapes d'usinage par tournage ainsi que des étapes au cours desquelles la lentille ophtalmique reçoit sur sa surface des marques permanentes techniques et/ou commerciales et/ou des marques temporaires techniques et/ou commerciales.

Ces marques peuvent être formées par exemple par moulage, gravure, ou attaque chimique. Elles représentent divers symboles (par exemple des cercles, croix, logos du fabriquant) et identifient un point particulier (par exemple le point de référence de prisme pour une lentille ophtalmique progressive), ou des traits d'axes, ou des formes indiquant une zone particulière (par exemple, la zone de vision de près ou la zone de vision de loin dans le cas d'une lentille ophtalmique progressive). Les marques techniques, permanentes et/ou temporaires sont des marques dites géométriques et représentatives de caractéristiques optiques.

La réalisation des marques permanentes techniques nécessite de créer un ou plusieurs référentiels pour le bon positionnement de ces marques sur la lentille. En effet, ce sont ces marques techniques qui vont par exemple permettre de positionner correctement une face de la lentille par rapport à l'autre pour son usinage (par exemple surfaçage ou détourage), et/ou de centrer la lentille ophtalmique dans la monture.

Ces marques permanentes techniques peuvent être réalisées sur une des faces de la lentille, par exemple la face avant, avant l'usinage de l'autre face de la lentille, ou la face arrière dans le cas de certaines lentilles ophtalmiques.

Dans un procédé connu de fabrication d'une lentille ophtalmique progressive, la lentille est bloquée par sa face avant (par exemple convexe), dans un premier référentiel, pour que la surface concave de sa face arrière soit usinée par tournage dans un deuxième référentiel. Ensuite, cette surface concave usinée est polie dans un troisième référentiel avant de subir une ou plusieurs opérations de marquage dans un quatrième référentiel.

On notera que les marques permanentes techniques sont généralement réalisées à l'aide de machines de marquage laser du type Excimer ou CO₂. Ces machines de marquage laser agissent sur la lentille ophtalmique par dégradation ou ablation de la matière, générant des déformations ou des enlèvements de matière sur la face de la lentille ophtalmique sur laquelle sont réalisées ces marques.

Dans un autre procédé connu de fabrication d'une lentille ophtalmique, la lentille est moulée dans une machine par coulée de matière plastique et les marques permanentes techniques sont également ménagées sur une face du verre dans la même machine. Cette machine est pourvue d'un moule comportant des demi-moules (fabriqués par usinage) sur lesquels sont formées, dans un premier référentiel, les faces de dépouille du moule puis ménagés, dans un second référentiel, des crans par gravure pour former les marques permanentes techniques,

DE 10 2009 004377 A1 divulgue un procédé de fabrication d'une lentille ophtalmique ainsi qu'une machine pour mettre en oeuvre ledit procédé.

L'invention vise à fournir un procédé de fabrication d'une lentille ophtalmique comportant une étape de marquage pour réaliser des marques permanentes techniques sur cette lentille ophtalmique, qui soit particulièrement simple, commode et économique à mettre en oeuvre.

L'invention a ainsi pour objet un procédé de fabrication d'une lentille ophtalmique selon la revendication 1 comportant une étape de marquage pour réaliser des marques permanentes techniques sur ladite lentille ophtalmique, laquelle présente un corps, une première face et une deuxième face opposée à ladite première face, lesquelles première face et deuxième face définissent respectivement une première surface optique et une deuxième surface optique ; ledit procédé étant caractérisé en ce qu'il comporte les étapes suivantes :
- fabriquer de manière additive ledit corps et lesdites première et deuxième faces, par le dépôt d'une pluralité de premiers éléments de volume prédéterminés d'un premier matériau ayant un premier indice complexe de réfraction, afin d'obtenir lesdites première et deuxième surfaces optiques ;
- fabriquer de manière additive lesdites marques permanentes techniques par le dépôt, lors dudit dépôt d'une pluralité desdits premiers éléments de volume dudit premier matériau, d'au moins un deuxième élément de volume prédéterminé d'un deuxième matériau ayant un deuxième indice complexe de réfraction différent dudit premier indice complexe de réfraction dudit premier matériau ;
avec ledit procédé qui est configuré de sorte que les marques permanentes techniques sont caractéristiques d'un référentiel optique à apporter à ladite lentille ophtalmique et localisées dans ladite lentille ophtalmique dans une position déterminée fonction desdites première et deuxième surfaces optiques.

Le procédé de fabrication selon l'invention permet avantageusement de fabriquer la lentille ophtalmique en une seule et même étape de fabrication additive.

C'est cette unique étape de fabrication additive qui permet d'apporter à la fois les propriétés optiques simples ou complexes de la lentille ophtalmique ainsi que les propriétés de repérage des marques permanentes techniques, en une seule étape lors de la fabrication additive du corps et des première et deuxième faces. Cela permet de positionner de manière particulièrement précise les marques permanentes techniques dans la lentille ophtalmique.

L'invention s'applique ici exclusivement aux marquages permanents dits techniques, correspondant aux marquages imposés par la norme ISO 8980-2 au paragraphe 7.1, et plus précisément aux marquages des paragraphes 7.1a) et 7.1b), car ces marquages techniques sont localisés dans la lentille ophtalmique dans une position déterminée en fonction de la première surface optique et de la deuxième surface optique, en d'autres termes fonction directement d'un référentiel optique apporté à la lentille ophtalmique.

On notera que ce référentiel optique de la lentille ophtalmique est théoriquement défini par la prescription à apporter à cette lentille et en particulier par les deux dioptres que forment notamment les première et deuxième surfaces optiques et par exemple par au moins l'un d'un point de montage, d'un point de référence prisme, d'un axe nasal temporal, d'une zone de vision de loin et/ou d'une zone de vision de près.

L'invention ne s'applique pas aux marquages permanents dits commerciaux, tels que des logos ou désignations de marques ou des marquages correspondant aux marquages imposés par la norme ISO 8980-2 au paragraphe 7.1c), car ceux-ci sont localisés dans la lentille ophtalmique en fonction uniquement de la forme de la lentille ophtalmique après détourage pour mise à la forme de la monture à laquelle elle est destinée, mais en aucun cas en fonction directement d'un référentiel optique apportée à la lentille ophtalmique.

On notera que l'étape de fabrication additive du corps et des première et deuxième faces correspond à la réalisation du référentiel optique de la lentille ophtalmique, aussi appelé ici référentiel invisible et/ou théorique ; tandis que l'étape de fabrication additive des marques permanentes techniques correspond à la réalisation d'un référentiel optique que l'on peut qualifier de "visible" qui est en fait une illustration du référentiel invisible.

Le procédé de fabrication selon l'invention est avantageusement à étape unique, avec le référentiel optique visible qui est réalisé durant la même étape que le référentiel optique invisible, contrairement aux procédés de fabrication de l'art antérieur susmentionnés, dits multi-étapes, qui sont exécutés en s'appuyant en outre sur différents référentiels intermédiaires créés à des moments différents, et donc qui peuvent introduire, lors de chaque utilisation d'un nouveau référentiel, des déviations ou des erreurs éloignant le nouveau référentiel du référentiel optique théorique.

On notera que la fabrication additive correspond ici à un procédé d'impression tridimensionnelle, ou de stéréolithographie, ou encore d'extrusion par fil thermoplastique.

Selon l'invention, le au moins un deuxième élément de volume prédéterminé formant les marques permanentes techniques est déposé selon une position déterminée fonction à la fois des premiers éléments de volume prédéterminés à son voisinage immédiat et des premiers éléments de volume prédéterminés formant notamment les première et deuxième faces de la lentille ophtalmique.

On notera également que l'indice complexe de réfraction est défini classiquement comme une quantité complexe n* = n + i x k, n étant la partie réelle de l'indice complexe et i x k est la partie imaginaire également nommée « coefficient d'extinction » avec i l'unité imaginaire définie telle que i²= -1. La prise en compte de la nature complexe de l'indice de réfraction permet ici de caractériser les propriétés optiques particulières relevant d'une valeur non nulle du coefficient d'extinction k et liées au choix d'un matériau d'indice n* pour la lentille ophtalmique. Ces propriétés particulières liées à une valeur non nulle de k peuvent notamment correspondre à des propriétés d'additifs comportant des molécules absorbantes aux longueurs d'ondes visibles ou ultra-violets ou infrarouges, et/ou des colloïdes absorbants aux longueurs d'ondes visibles ou ultra-violets ou infrarouges.

Selon des caractéristiques préférées, simples, commodes et économiques du procédé selon l'invention :
- ladite étape de fabriquer de manière additive comprend une étape de détermination d'une consigne de fabrication de ladite lentille ophtalmique, comportant des caractéristiques géométriques dudit corps et desdites première et deuxième faces et des caractéristiques géométriques desdites marques permanentes techniques qui sont fonction desdites caractéristiques géométriques dudit corps et desdites première et deuxième faces et dudit premier indice complexe de réfraction ; ce qui permet de disposer les marques permanentes techniques selon une fonction optique résultante de la géométrie globale de la lentille ophtalmique (après fabrication additive du corps et des première et deuxième faces avec le matériau ayant un premier indice complexe de réfraction) ;- ladite position déterminée et lesdites caractéristiques géométriques desdites marques permanentes techniques sont fonction de la distance, nulle ou non nulle, les séparant desdites première et deuxièmes faces
- ladite étape de fabriquer de manière additive lesdites marques permanentes techniques est réalisée au dépôt d'une pluralité desdits premiers éléments de volume dudit premier matériau lors de la fabrication additive au moins dudit corps de ladite lentille ophtalmique ;
- lesdites marques permanentes techniques sont réalisées dans ledit corps de ladite lentille ophtalmique, au plus près de l'une au moins desdites première et deuxième faces de ladite lentille ophtalmique ;
- ladite étape de fabriquer de manière additive lesdites marques permanentes techniques est réalisée au dépôt d'une pluralité desdits premiers éléments de volume dudit premier matériau lors de la fabrication additive au moins de l'une desdites première et deuxième faces de ladite lentille ophtalmique ;
- lesdites marques permanentes techniques sont réalisées au moins au plus près d'une face de ladite lentille ophtalmique, parmi ladite première face ou ladite deuxième face, qui présente la plus forte variation de progression ;
- ladite étape de fabriquer de manière additive lesdites marques permanentes techniques est réalisée au dépôt par superposition d'une pluralité desdits premiers éléments de volume dudit premier matériau ;
- ledit premier matériau et ledit deuxième matériau sont configurés de telle sorte que la différence entre ledit premier indice complexe de réfraction dudit premier matériau et ledit deuxième indice complexe de réfraction dudit deuxième matériau est détectable ;
- le procédé comporte une étape de fourniture d'un fichier de fabrication caractéristique d'une géométrie dudit corps et desdites première et deuxième faces ainsi que desdites marques permanentes techniques de ladite lentille ophtalmique ; avec lesdites caractéristiques géométriques desdites marques permanentes techniques qui sont fonction desdites caractéristiques géométriques dudit corps et desdites première et deuxième faces et dudit premier indice complexe de réfraction ; et/ou
- le procédé comporte une étape de polissage de l'une au moins desdites première et deuxième faces de ladite lentille ophtalmique.

L'invention a aussi pour objet une machine de fabrication pour réaliser une lentille ophtalmique pourvue de marques permanentes techniques en mettant en oeuvre le procédé tel que décrit ci-dessus, la machine étant conforme à la revendication 12.

On va maintenant poursuivre l'exposé de l'invention par la description d'un exemple de réalisation, donnée ci-après à titre illustratif et non limitatif, en référence aux dessins annexés sur lesquels :
- la figure 1 représente schématiquement une machine de fabrication additive configurée pour réaliser une lentille ophtalmique pourvue de marques permanentes techniques ;
- la figure 2 représente schématiquement, en élévation, une lentille ophtalmique pourvue notamment de marques permanentes techniques réalisées avec la machine de fabrication illustrée sur la figure 1 ;
- la figure 3 représente schématiquement, en élévation et en coupe, la lentille ophtalmique illustrée sur la figure 2 ;
- les figures 4 à 6 sont des vues schématiques en coupe de variantes de réalisation de la lentille ophtalmique de la figure 3 ;
- la figure 7 est un schéma-blocs illustrant différentes étapes de fonctionnement d'un procédé de fabrication d'une lentille ophtalmique, mis en oeuvre au moins partiellement dans la machine de la figure 1 ; et
- la figure 8 est un schéma-blocs illustrant une étape de fabrication additive de la lentille ophtalmique du procédé illustré sur la figure 7.

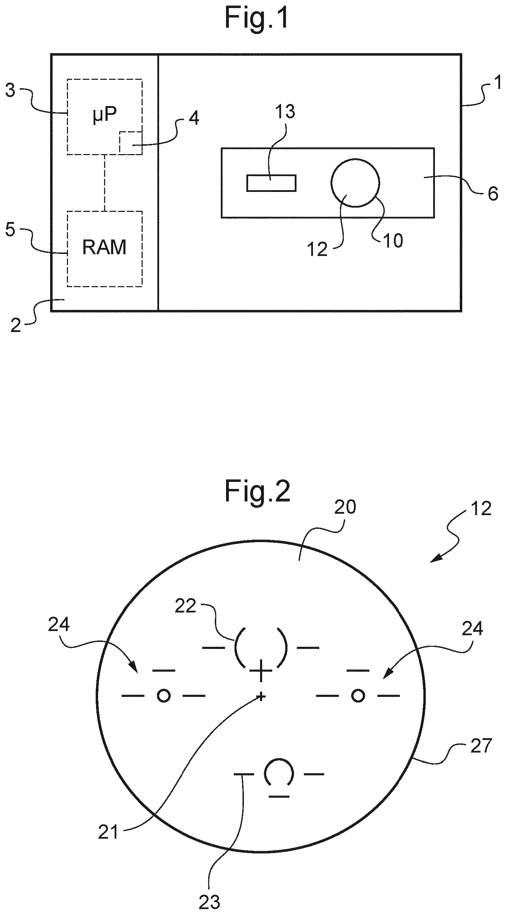

La figure 1 illustre une machine de fabrication additive 1, ici une machine d'impression tridimensionnelle à commande numérique, la commande numérique désignant l'ensemble des matériels et logiciels ayant pour fonction de donner des instructions de mouvement, de manipulation de matière et de contrôle de moyens de polymérisation à tous les organes de la machine de fabrication additive 1.

Cette machine de fabrication additive 1 est ici configurée pour déposer par juxtaposition une pluralité d'éléments de volume prédéterminés formant des couches superposées (autrement dit en couche par couche), d'au moins un matériau sur un support 10 pour former une lentille ophtalmique 12, y compris une lentille ophtalmique dite progressive possédant en outre des composantes toriques et prismatiques.

Chaque élément de volume est défini par une composition prédéterminée et une taille prédéterminée.

Comme il s'agit ici de fabrication additive et en particulier d'impression tridimensionnelle, on parle également d'élément volumétrique, ou élément de volume, appelé aussi voxel (représentatif d'un pixel en trois dimensions).

Pour cela, la machine de fabrication additive 1 comporte une buse ou une rampe de buses 13 ainsi qu'une unité de contrôle et de commande 2 pourvue d'un système de traitement de données comportant un microprocesseur 3 muni d'une mémoire 4, notamment non volatile, lui permettant de charger et stocker un logiciel, autrement dit un programme d'ordinateur qui, lorsqu'il est exécuté dans le microprocesseur 3, permet la mise en oeuvre d'un procédé de fabrication additive. Cette mémoire non volatile 4 est par exemple de type ROM (« *Read-Only Memory* » en anglais).

L'unité 2 comporte en outre une mémoire 5, notamment volatile, permettant de mémoriser des données durant l'exécution du logiciel et la mise en oeuvre du procédé de fabrication additive.

Cette mémoire volatile 5 est par exemple de type RAM ou EEPROM (respectivement « *Random Access Memory* » et *« Electrically Erasable Programmable Read-Only Memory* » en anglais).

La machine de fabrication additive 1 comporte de plus une ouverture 6, ici vitrée, configurée pour accéder à la lentille ophtalmique 12 fabriquée de manière additive par cette machine 1, laquelle lentille ophtalmique 12 est portée par le support 10.

On notera que pour fabriquer de manière additive la lentille ophtalmique 12, on a besoin de connaître précisément certains paramètres de fabrication additive, tels que la vitesse d'avance de la ou des buses 13, l'énergie et la source d'énergie mises en oeuvre, ici une source émettant dans l'ultra-violet pour la machine d'impression tridimensionnelle mais il pourrait s'agir d'un laser dans le cas d'une machine de stéréolithographie ou encore d'une énergie de chauffe dans le cas d'un dépôt à fil tendu appelé aussi extrusion par fil thermoplastique.

On a aussi besoin de connaître précisément le ou les matériaux utilisés et leur état, ici sous forme liquide.

On a aussi besoin de connaître précisément la géométrie de la lentille ophtalmique 12, laquelle est caractérisée par un fichier de fabrication caractéristique à la fois des propriétés optiques simples ou complexes de la lentille ophtalmique 12 et des marques permanentes techniques 24 (figure 2) que comporte cette lentille ophtalmique 12, lesquelles marques permanentes techniques sont définies et positionnées dans la lentille en fonction des propriétés optiques simples ou complexes de cette lentille

On notera que ces marques permanentes techniques 24 permettent notamment de positionner correctement la lentille ophtalmique 12 pour des étapes postérieures de fabrication de cette lentille ophtalmique 12 ; par exemple le surfaçage et/ou le polissage et/ou le détourage de cette lentille.

On notera que d'autres marques 21 à 23, qui sont temporaires et techniques, permettent également de positionner correctement la lentille ophtalmique 12.

La figure 2 montre, en vue de dessus, la lentille ophtalmique 12 prise isolément.

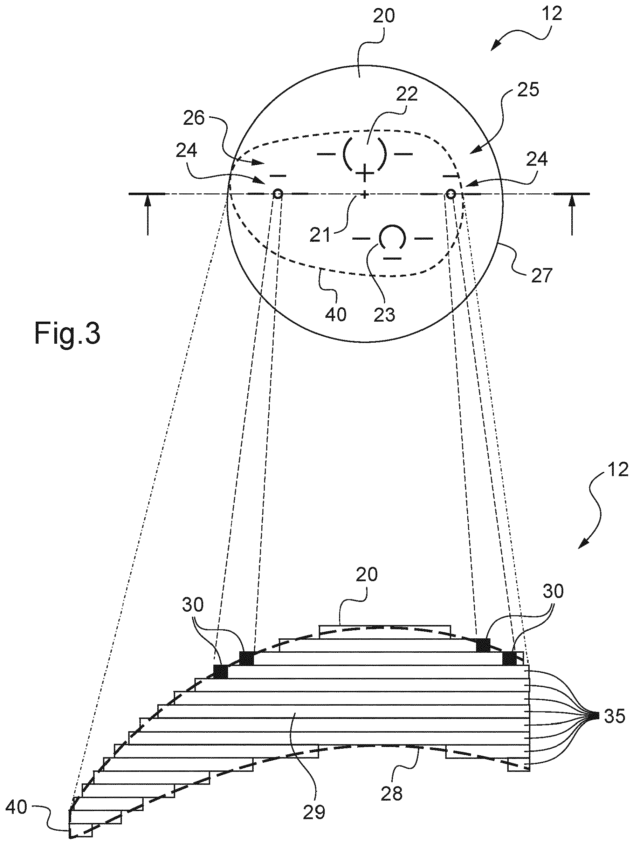

Cette lentille ophtalmique 12 présente une première face 20 dite face avant, qui est ici convexe, ainsi qu'une deuxième face 28 (figures 3 à 6) dite face arrière qui est ici concave.

La première face 20 définit une première surface optique tandis que la deuxième face 28 définit une deuxième surface optique.

La lentille ophtalmique 12 présente en outre une tranche périphérique 27 raccordant la première face 20 à la deuxième face 28.

Cette lentille ophtalmique 12 présente ici des marques permanentes techniques 24 et des marques temporaires techniques 21 à 23, à savoir une marque indiquant un point de référence 21 situé au centre de cette lentille ophtalmique 12, une marque indiquant un point de contrôle 22 d'une zone de vision de loin situé juste au-dessus du point de référence 21, un point de contrôle 23 d'une zone de vision de près situé en dessous du point de référence 21 et une zone 24 passant par un axe horizontal dit nasal-temporal (ou encore nez-oreille).

Les marques visibles sur la figure 2 qui sont des marques permanentes techniques correspondent ici à la zone 24.

Ces marques permanentes techniques 24 sont ici ménagées sur la première face 20 de la lentille ophtalmique 12.

On notera également qu'au niveau de la zone 24 passant par l'axe horizontal dit nasal-temporal sont ménagés deux microcercles permanents de part et d'autre du point de référence 21 et chacun à égale distance de ce dernier.

On va maintenant décrire plus en détail en référence à la figure 3 la lentille ophtalmique 12 et en particulier la position des microcercles techniques 24 dans cette lentille ophtalmique 12.

La figure 3 montre la lentille ophtalmique 12 fabriquée par la machine de fabrication additive 1 illustrée sur la figure 1. Cette lentille ophtalmique 12 présente une zone utile 26 ainsi qu'une zone non utile 25.

La zone utile 26 est la zone de la lentille ophtalmique 12 qui est destinée à se trouver dans une monture de lunettes lorsque cette lentille 12 est mise à la forme de la monture et est montée dans cette dernière. En particulier, cette zone utile 26 présente au moins une partie ayant des caractéristiques optiques simples (lentille ophtalmique simple vision) ou complexes (lentille ophtalmique progressive) nécessaire pour apporter une correction au porteur.

La zone non utile 25 est quant à elle destinée à disparaître lors notamment de l'étape de détourage, dite aussi taillage, pour adapter la forme (le contour) de la lentille ophtalmique 12 à la monture de lunettes. On notera que le procédé décrit ci-après peut être configuré pour fabriquer des lentilles ophtalmiques sans zone non utile, c'est-à-dire directement à la forme de la monture (et ne nécessitant donc pas d'étape de détourage ou de taillage).

On voit également sur la figure 3, au niveau de la coupe de la lentille ophtalmique 12 prise selon un axe en pointillé en haut de la figure 3, que la lentille ophtalmique 12 présente un corps 29 ménagé entre la première face 20 et la deuxième face 28.

On notera que sur cette coupe est uniquement montrée la zone utile 26 de la lentille ophtalmique 12, laquelle comporte donc un contour périphérique 40 taillé, c'est-à-dire à la forme de la monture, indépendamment du procédé utilisé pour obtenir ce contour périphérique taillé.

La lentille ophtalmique 12 est ici formée par une pluralité de couches superposées d'un premier matériau 35, chaque couche étant elle-même formée d'une pluralité de premiers éléments de volume prédéterminés.

Cette pluralité de couches superposées forme le corps 29 ensemble avec la deuxième face 28 et la première face 20 de la lentille ophtalmique 12.

On observera que, même si la lentille ophtalmique 12 est ici déjà détourée, les couches superposées du premier matériau 35 présentent des longueurs différentes de manière à former les première et deuxième faces 20 et 28 de cette lentille ophtalmique 12.

Ces couches présentent ici chacune une épaisseur constante sur la longueur et elles présentent toutes la même épaisseur.

On notera que cette équi-épaisseur est ici obtenue grâce à la diffusion contrôlée et commandée, par la buse ou la rampe de buses 13 de la machine de fabrication 1, d'une quantité déterminée de premiers éléments de volume prédéterminés pour chaque couche superposée du premier matériau 35.

On notera que le premier matériau est ici un polymère acrylique, et plus précisément un photopolymère, par exemple un photopolymère tel que le produit commercialisé par la société OBJET Ltd, sous la marque VeroClear ^{™}, ayant un indice de réfraction environ égal à 1,5.

La figure 3 montre également que les microcercles 24 forment des marques permanentes techniques ménagées au niveau de la première face 20 de la lentille ophtalmique 12.

On notera que ces microcercles techniques 24 sont ici ménagés au plus près de la première face 20 car il s'agit de la face de la lentille ophtalmique la plus « complexe », c'est-à-dire, dans le cas d'une lentille progressive, la face qui présente la plus forte progression (autrement dit la plus grande différence d'altitude, en ne considérant pas les éventuelles composantes toriques et sphériques).

Ici (figure 3), ces microcercles 24 formant des marques permanentes techniques sont formés dans l'épaisseur de deux couches superposées du premier matériau 35.

Pour cela, la lentille ophtalmique 12 comporte plusieurs éléments de volume prédéterminés d'un deuxième matériau 30 disposés dans l'épaisseur de plusieurs des couches du premier matériau 35.

Le microcercle technique 24 ménagé à gauche sur la figure 3 est formé d'au moins un élément de volume prédéterminé du deuxième matériau 30 disposé dans l'épaisseur d'une première couche du premier matériau 35 et d'au moins un autre élément de volume prédéterminé du deuxième matériau 30 disposé dans l'épaisseur d'une deuxième couche du premier matériau 35 immédiatement supérieure à la première couche.

Le microcercle technique 24 ménagé à droite sur la figure 3 est quant à lui formé d'au moins un élément de volume prédéterminé du deuxième matériau 30 disposé dans l'épaisseur de la deuxième couche du premier matériau 35 et d'au moins un autre élément de volume prédéterminé du deuxième matériau 30 disposé dans l'épaisseur d'une troisième couche du premier matériau 35 immédiatement supérieure à la deuxième couche.

Chaque microcercle technique 24 formant une marque permanente est ici fabriqué de manière additive par le dépôt, lors du dépôt de deux couches superposées et successives du premier matériau 35, d'un nombre déterminé d'éléments de volume prédéterminés du deuxième matériau 30.

On notera que le deuxième matériau 30 est ici un polymère acrylique comportant des particules colloïdales de Zircone ZrO2 et ayant un deuxième indice complexe de réfraction d'environ 1,53.

Le premier matériau 35 présente donc un indice complexe de réfraction différent de l'indice complexe de réfraction du deuxième matériau 30 et plus précisément, la différence entre ces indices complexes de réfraction est ici de l'ordre d'environ 0,03, les valeurs des coefficients d'extinction étant nulles.

Cette différence d'indice complexe de réfraction permet de rendre visible ces microcercles 24 formant des marques permanentes techniques par exemple par un opticien sans toutefois gêner la vision du porteur de cette lentille ophtalmique 12.

Ces microcercles techniques 24 sont détectables par exemple par des dispositifs d'illumination et de détection.

On notera que la visibilité des microcercles techniques 24 est fonction notamment de la géométrie de ces derniers, laquelle géométrie est définie par le nombre de deuxièmes éléments de volume prédéterminés du deuxième matériau 30 et l'agencement de ces deuxièmes éléments de volume prédéterminé les uns par rapport aux autres et par rapport aux premiers éléments de volume prédéterminés du premier matériau 35.

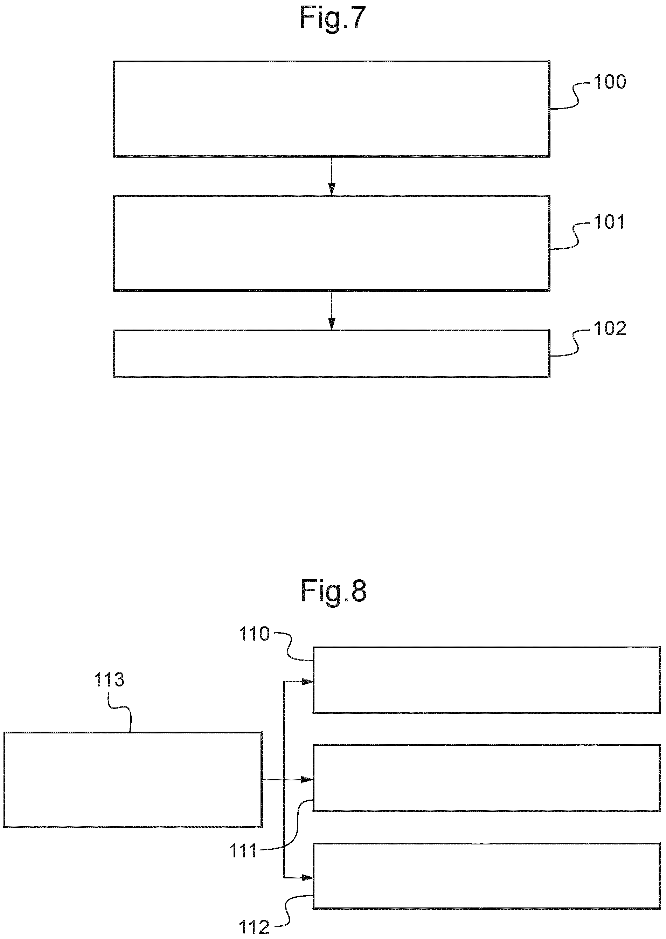

On va maintenant décrire en référence aux figures 7 et 8 les étapes de fabrication additive de la lentille ophtalmique 12 qui vient d'être décrite, grâce notamment à la machine de fabrication additive 1 illustrée sur la figure 1.

La figure 7 est un schéma-blocs des étapes permettant la fabrication de la lentille ophtalmique 12.

L'unité de contrôle et de commande 2 est configurée pour déterminer une consigne de fabrication de la lentille ophtalmique 12, laquelle consigne comporte les caractéristiques géométriques du corps 29 et des première et deuxième faces 20 et 28 et les caractéristiques géométriques et de positionnement des marques permanentes techniques 24 qui sont fonction des caractéristiques géométriques du corps 29 et des première et deuxième faces 20 et 28 et du premier indice complexe de réfraction.

On notera que les caractéristiques géométriques du corps 29 et des première et deuxième faces 20 et 28, ensemble avec le premier indice complexe de réfraction, définissent un référentiel optique invisible de la lentille, tandis que les caractéristiques géométriques et de positionnement des marques permanentes techniques 24 définissent un référentiel optique visible de la lentille, illustrant le référentiel optique invisible.

La position déterminée et les caractéristiques géométriques des marques permanentes techniques 24 sont notamment fonction de la distance, nulle ou non nulle, les séparant des première et deuxième faces 20 et 28.

L'unité de contrôle et de commande 2 est configurée pour fournir à l'étape 100 (Fournir un fichier de fabrication caractéristique de la géométrie et des marques permanentes incorporées dans la lentille ophtalmique) un fichier de fabrication caractéristique de la géométrie et des marques permanentes techniques 24 incorporées dans la lentille ophtalmique 12 à fabriquer, lequel fichier de fabrication est généré à partir de la consigne de fabrication préalablement déterminée.

Il s'agit ici d'un fichier de fabrication caractéristique de la géométrie du corps 29 et des première et deuxième faces 20 et 28 ainsi que de l'ensemble des marques permanentes techniques de la lentille ophtalmique 12, lesquelles marques permanentes techniques 24 sont caractérisées (en position) en fonction des caractéristiques géométriques du corps 29 et des première et deuxième faces 20 et 28 et du premier indice complexe de réfraction dans lequel sont réalisés ce corps 29 et ces faces 20 et 28.On notera que ce fichier prend en compte l'ensemble des fonctions optiques prescrites pour la lentille ophtalmique 12, qu'elles soient simples ou progressives avec ou sans composantes toriques voire prismatiques.

Ce fichier de fabrication comporte des caractéristiques géométriques de surface en un nombre fini de points, ainsi que les caractéristiques matériaux.

L'unité de contrôle et de commande 2 est ensuite configurée pour déterminer à partir du fichier de fabrication reçu à l'étape 100, le nombre de premiers éléments de volume prédéterminés et le nombre de couches du premier matériau 35 à déposer successivement de manière superposée, ainsi que le nombre de deuxièmes éléments de volume prédéterminés de deuxième matériau 30 à déposer et l'emplacement où déposer ces derniers lors du dépôt des premiers éléments de volume prédéterminés du premier matériau 35.

Le procédé comporte ensuite l'étape 101 (Fabrication additive de la lentille ophtalmique pourvue des caractéristiques géométriques optiques et des marques permanentes) de fabriquer de manière additive la lentille ophtalmique 12 pourvue des caractéristiques géométriques, optiques et des marques permanentes techniques 24 dans le corps 29 et les première et deuxième faces 20 et 28 de cette lentille ophtalmique 12.

Plus précisément, le procédé comporte ici simultanément les étapes 110 (Fabrication additive de la deuxième face de la lentille ophtalmique), 111 (Fabrication additive du corps de la lentille ophtalmique) et 112 (Fabrication additive de la première face de la lentille ophtalmique) (figure 8) de fabriquer de manière additive respectivement la deuxième face 28, le corps 29 et la première face 20 de la lentille ophtalmique 12, en déposant une pluralité de couches du premier matériau 35 grâce à la buse ou la rampe de buses 13, sur le support 10 de la machine 1.

Le procédé comporte en outre l'étape 113 (Fabrication additive des marques permanentes de la lentille ophtalmique) de fabriquer de manière additive les marques permanentes techniques 21 à 24 de la lentille ophtalmique 12 au même moment que l'une quelconque des étapes 110, 111 et 112 de fabrication additive respectivement de la deuxième face 28, du corps 29 et de la première face 20 de la lentille ophtalmique 12.

Le procédé peut en outre comporter une étape 102 (Polissage de la lentille ophtalmique) de polissage de la lentille ophtalmique 12 fabriquée de manière additive.

Ici, le procédé est configuré pour fabriquer la lentille ophtalmique 12 directement à la forme de la monture et ne nécessite pas de détourage ou taillage. En variante, le procédé comporte également une étape de détourage ou de taillage de la lentille ophtalmique à la forme de la monture.

On notera que la machine de fabrication additive illustrée sur la figure 1 ne permet ici de mettre en oeuvre que les étapes 100, 101 et 110 à 113 du procédé, tandis que les éventuelles étapes 102 de polissage, détourage et taillage sont généralement réalisées dans une machine d'usinage et/ou de meulage, pourvue d'un référentiel distinct de celui de la machine de fabrication additive.

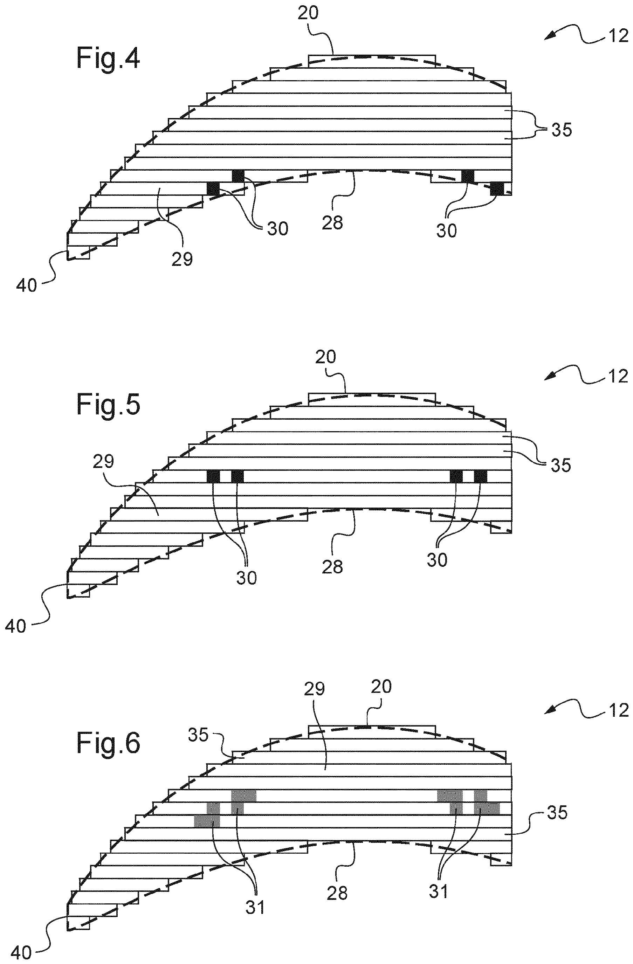

On va maintenant décrire en référence aux figures 4 à 6 des variantes de réalisation de la lentille ophtalmique 12 fabriquée ici par impression tridimensionnelle à l'aide de la machine de fabrication additive illustrée sur la figure 1, laquelle met en oeuvre les étapes 100, 101 et 110 à 113 du procédé de fabrication illustré sur les figures 7 et 8.

Les figures 4 à 6 sont similaires à la vue en coupe sur la figure 3 et on notera que les marques permanentes techniques visibles sur les figures 4 à 6 sont donc également représentatives des microcercles sur la zone 24 de la lentille ophtalmique 12.

On observera que les références utilisées sur les figures 4 à 6 sont identiques à celles utilisées sur la figure 3 car les lentilles ophtalmiques 12 illustrées sur les figures 3 à 6 sont similaires, à l'exception des microcercles formant les marques permanentes techniques qui sont disposés différemment sur chacune de ces lentilles ophtalmiques 12 (c'est-à-dire ménagés à des emplacements différents des emplacements où ils sont déposés sur la figure 3).

Sur la figure 4, les microcercles formant des marques permanentes techniques sont ménagés au niveau de la première face 28 de la lentille ophtalmique 12 car il s'agit ici de la face qui présente la surface optique la plus « complexe » de cette lentille ophtalmique 12.

Les microcercles sont ici chacun fabriqués de manière additive dans l'épaisseur de deux mêmes couches du premier matériau 35 lors de la fabrication additive du corps 29 et de la deuxième face 28 de cette lentille ophtalmique 12.

Ces microcercles formant des marques permanentes techniques sont formés de la même manière que précédemment, c'est-à-dire par le dépôt d'un nombre déterminé d'éléments de volume prédéterminés du deuxième matériau 30 au moment du dépôt des couches du premier matériau 35.

Les premier et deuxième matériaux sont ici identiques à ceux décrits précédem ment.

La figure 5 illustre quant à elle une lentille ophtalmique 12 similaire à celle des figures 3 et 4 à l'exception du fait que les microcercles formant des marques permanentes techniques sont ici chacun fabriqués de manière additive dans l'épaisseur d'une même couche du premier matériau lors de la fabrication additive du corps 29 de la lentille ophtalmique 12.

Ces microcercles sont disposés à distance à la fois de la première face 20 et de la deuxième face 28 de cette lentille ophtalmique 12.

Comme précédemment, le premier matériau 35 et le deuxième matériau 30 sont identiques à ceux décrits ci-dessus.

Les microcercles formant des marques permanentes techniques sont ici fabriqués de manière additive en déposant un nombre déterminé d'éléments de volume prédéterminés du deuxième matériau 30 lors du dépôt (c'est-à-dire au même moment) d'une seule couche du premier matériau 35.

La figure 6 illustre quant à elle une lentille ophtalmique 12 similaire à celle de la figure 5 (en ce qui concerne l'emplacement des microcercles dans le corps 29) à l'exception du fait que le deuxième matériau est ici différent du deuxième matériau décrit pour la figure 3 et utilisé pour les figures 4 et 5, tandis qu'il s'agit du même premier matériau 35 que celui décrit ci-dessus.

Le deuxième matériau 31 est ici un matériau dit fluorescent, par exemple une formulation polymère comportant des molécules de la famille des Coumarines.

Dans la lentille ophtalmique 12 illustrée sur la figure 6, les microcercles formant des marques permanentes techniques sont fabriqués dans le corps 29 de cette lentille ophtalmique 12, mais contrairement à la lentille ophtalmique de la figure 5, ici, ces microcercles sont chacun fabriqués de manière additive lors du dépôt (c'est-à-dire au même moment) de deux ou trois couches successives et superposées du premier matériau 35.

Dans des variantes non illustrées :
- les marques permanentes techniques ne sont pas ménagées aux endroits illustrés sur les figures 3 et 6 mais ailleurs dans la lentille ophtalmique tant qu'elles sont ménagées dans la zone utile en fonction du référentiel optique invisible de la lentille ophtalmique ;
- les premier et deuxième matériaux sont différents de ceux indiqués ci-dessus, tant que leurs indices complexes de réfraction sont différents avec cette différence qui est détectable (la différence entre les deux indices complexes peut porter sur la partie réelle et/ou la partie imaginaire de ces indices) ;
- la lentille ophtalmique comporte des marques permanentes techniques à la fois au niveau de la première face et/ou de la deuxième face et/ou dans le corps ;
- la pluralité de premiers éléments de volume prédéterminés juxtaposés et superposés forme des couches superposées qui présentent chacune une épaisseur constante ou variable sur la longueur et/ou qui présentent toutes la même épaisseur ou pas ;
- le premier matériau est par exemple un matériau transparent formé par stéréolithographie, ce matériau étant par exemple un polymère époxy commercialisé par la société 3D SYSTEMS sous la marque Accura^{®} ClearVue ^{™}, ayant un indice de réfraction proche de 1,5 ;
- le premier matériau est un photopolymère comportant une ou plusieurs familles de molécules ayant une ou plusieurs fonctions acryliques, methacryliques, acrylates, méthacrylates, une famille de molécules ayant une ou plusieurs fonctions époxy, thioépoxy, une famille de molécules ayant une ou plusieurs fonctions vinyle éther, vinyle caprolactame, vinylpyrolidone ou une combinaison de ces fonctions ; les fonctions chimiques mentionnées pouvant être portées par des monomères ou des oligomères ou une combinaison de monomères et oligomères ;
- le premier matériau peut comporter au moins un photo-initiateur ;
- le premier matériau peut comporter des colloïdes, en particulier des particules colloïdales ayant des dimensions par exemple inférieures aux longueurs d'onde visibles, telles que par exemple des particules colloïdales d'oxyde de Silice SiO2 ou des particules colloïdales d'oxyde de Zircone ZrO2 ;
- le deuxième matériau est un colorant qui appartient aux familles des azo, ou rhodamines, ou cyanines, ou polymethines, ou merocyanines, ou fluorescéines, ou pyrylium, ou phtalocyanines, ou pérylènes, ou benzanthrones, ou anthrapyrimidines, ou anthrapyridones, ou encore un colorant pourvu de complexes métalliques tel que des chélates ou des cryptates de terres rares ;
- le procédé comporte en outre une ou plusieurs étapes avant l'éventuelle étape de polissage de la lentille ophtalmique, par exemple l'étape de marquage pour former des marques dites temporaires ;
- la machine de fabrication additive n'est pas une machine d'impression tridimensionnelle mais plutôt une machine de stéréolithographie, (SLA pour « Stereolytograpy *Apparatus* » en anglais) ou une machine d'extrusion par fil thermoplastique, aussi appelée machine de dépôt à fil tendu (FDM pour « *Fuse Déposition Modeling* » en anglais) ; et/ou
- l'unité de commande et de contrôle ne comporte pas de microprocesseur, mais plutôt un microcontrôleur.

On rappelle plus généralement que l'invention ne se limite pas aux exemples décrits et représentés.

## Revendications

1. Procédé de fabrication d'une lentille ophtalmique (12), comportant une étape de marquage pour réaliser des marques permanentes techniques (24) sur ladite lentille ophtalmique (12), laquelle présente un corps (29), une première face (20) et une deuxième face (28) opposée à ladite première face (20), lesquelles première face (20) et deuxième face (28) définissent respectivement une première surface optique et une deuxième surface optique ; ledit procédé comportant les étapes suivantes :
- fabriquer de manière additive (110-112) ledit corps (29) et lesdites première et deuxième faces (20, 28), par le dépôt d'une pluralité de premiers éléments de volume prédéterminés d'un premier matériau ayant un premier indice complexe de réfraction (35), afin d'obtenir lesdites première et deuxième surfaces optiques ;
- fabriquer de manière additive (113) lesdites marques permanentes techniques (24) par le dépôt, lors dudit dépôt d'une pluralité desdits premiers éléments de volume dudit premier matériau (35), d'au moins un deuxième élément de volume prédéterminé d'un deuxième matériau ayant un deuxième indice complexe de réfraction (30, 31) différent dudit premier indice complexe de réfraction dudit premier matériau (35) ;
avec ledit procédé qui est configuré de sorte que les marques permanentes techniques (24) sont caractéristiques d'un référentiel optique à apporter à ladite lentille ophtalmique (12) et localisées dans ladite lentille ophtalmique (12) dans une position déterminée fonction desdites première et deuxième surfaces optiques.

2. Procédé selon la revendication 1, **caractérisé en ce que** ladite étape de fabriquer de manière additive (100) comprend une étape de détermination d'une consigne de fabrication de ladite lentille ophtalmique (12), comportant des caractéristiques géométriques dudit corps (29) et desdites première et deuxième faces (20, 28) et des caractéristiques géométriques desdites marques permanentes techniques (24) qui sont fonction desdites caractéristiques géométriques dudit corps (29) et desdites première et deuxième faces (20, 28) et dudit premier indice complexe de réfraction.

3. Procédé selon la revendication 2, **caractérisé en ce que** ladite position déterminée et lesdites caractéristiques géométriques desdites marques permanentes techniques (24) sont fonction de la distance, nulle ou non nulle, les séparant desdites première et deuxièmes faces (20, 28).

4. Procédé selon l'une quelconque des revendications 1 à 3, **caractérisé en ce que** ladite étape de fabriquer de manière additive (113) lesdites marques permanentes techniques (24) est réalisée au dépôt d'une pluralité desdits premiers éléments de volume dudit premier matériau (35) lors de la fabrication additive au moins dudit corps (29) de ladite lentille ophtalmique (12).

5. Procédé selon la revendication 4, **caractérisé en ce que** lesdites marques permanentes techniques (24) sont réalisées dans ledit corps (29) de ladite lentille ophtalmique (12), au plus près de l'une au moins desdites première et deuxième faces (20, 28) de ladite lentille ophtalmique (12).

6. Procédé selon l'une quelconque des revendications 1 à 3, **caractérisé en ce que** ladite étape de fabriquer de manière additive (113) lesdites marques permanentes techniques (21-24) est réalisée au dépôt d'une pluralité desdits premiers éléments de volume dudit premier matériau (35) lors de la fabrication additive au moins de l'une desdites première et deuxième faces (20, 28) de ladite lentille ophtalmique (12).

7. Procédé selon l'une quelconque des revendications 1 à 6, **caractérisé en ce que** lesdites marques permanentes techniques (24) sont réalisées au moins au plus près d'une face de ladite lentille ophtalmique (12), parmi ladite première face (20) ou ladite deuxième face (28), qui présente la plus forte variation de progression.

8. Procédé selon l'une quelconque des revendications 1 à 7, **caractérisé en ce que** ladite étape de fabriquer de manière additive (113) lesdites marques permanentes techniques (24) est réalisée au dépôt par superposition d'une pluralité desdits premiers éléments de volume dudit premier matériau (35).

9. Procédé selon l'une quelconque des revendications 1 à 8, **caractérisé en ce que** ledit premier matériau (35) et ledit deuxième matériau (30, 31) sont configurés de telle sorte que la différence entre ledit premier indice complexe de réfraction dudit premier matériau (35) et ledit deuxième indice complexe de réfraction dudit deuxième matériau (30, 31) est détectable.

10. Procédé selon l'une quelconque des revendications 1 à 9, **caractérisé en ce qu'**il comporte une étape (100) de fourniture d'un fichier de fabrication caractéristique d'une géométrie dudit corps (29) et desdites première et deuxième faces (20, 28) ainsi que desdites marques permanentes techniques (24) de ladite lentille ophtalmique (12) ; avec lesdites caractéristiques géométriques desdites marques permanentes techniques (24) qui sont fonction desdites caractéristiques géométriques dudit corps (29) et desdites première et deuxième faces (20, 28) et dudit premier indice complexe de réfraction.

11. Procédé selon l'une quelconque des revendications 1 à 10, **caractérisé en ce qu'**il comporte une étape de polissage de l'une au moins desdites première et deuxième faces (20, 28) de ladite lentille ophtalmique (12).

12. Machine de fabrication additive **caractérisée en ce qu'**elle est configurée pour réaliser une lentille ophtalmique (12) présentant un corps (29), une première face (20) et une deuxième face (28) opposée à ladite première face (20), lesquelles première face (20) et deuxième face (28) définissent respectivement une première surface optique et une deuxième surface optique, et étant pourvue de marques permanentes techniques (24) en mettant en oeuvre ledit procédé selon l'une quelconque des revendications 1 à 11, la machine de fabrication additive (1) comportant :
un moyen pour fabriquer de manière additive (110-112) ledit corps (29) et lesdites première et deuxième faces opposées (20, 28), par le dépôt d'une pluralité de premiers éléments de volume prédéterminés d'un premier matériau ayant un premier indice complexe de réfraction (35), afin d'obtenir lesdites première et deuxième surfaces optiques ; et pour fabriquer de manière additive (113) lesdites marques permanentes techniques (24) par le dépôt, lors dudit dépôt d'une pluralité desdits premiers éléments de volume dudit premier matériau (35), d'au moins un deuxième élément de volume prédéterminé d'un deuxième matériau ayant un deuxième indice complexe de réfraction (30, 31) différent dudit premier indice complexe de réfraction dudit premier matériau (35) ;
un moyen de contrôle configuré ppour contrôler le moyen pour fabriquer de manière additive afin de :
a) fabriquer de manière additive (110-112) ledit corps (29) et lesdites première et deuxième faces opposées (20, 28), par le dépôt d'une pluralité de premiers éléments de volume prédéterminés d'un premier matériau ayant un premier indice complexe de réfraction (35), afin d'obtenir lesdites première et deuxième surfaces optiques ;
b) fabriquer de manière additive (113) lesdites marques permanentes techniques (24) par le dépôt, lors dudit dépôt d'une pluralité desdits premiers éléments de volume dudit premier matériau (35), d'au moins un deuxième élément de volume prédéterminé d'un deuxième matériau ayant un deuxième indice complexe de réfraction (30, 31) différent dudit premier indice complexe de réfraction dudit premier matériau (35) ; les marques permanentes techniques (24) étant caractéristiques d'un référentiel optique à apporter à ladite lentille ophtalmique (12) et localisées dans ladite lentille ophtalmique (12) dans une position déterminée fonction desdites première et deuxième surfaces optiques.

## Patentansprüche

1. Verfahren zur Herstellung einer ophthalmischen Linse (12), das einen Schritt des Markierens zur Herstellung dauerhafter technischer Markierungen (24) auf der ophthalmischen Linse (12) aufweist, die einen Körper (29), eine erste Seite (20) und eine zweite Seite (28) gegenüber der ersten Seite (20) aufweist, wobei die erste Seite (20) und die zweite Seite (28) eine erste optische Oberfläche bzw. eine zweite optische Oberfläche definieren; wobei das Verfahren die folgenden Schritte aufweist:
- Additives Fertigen (110-112) des Körpers (29) und der ersten und zweiten Seite (20, 28) durch die Aufbringung einer Mehrzahl von ersten vorbestimmten Volumenelementen aus einem ersten Material mit einem ersten komplexen Brechungsindex (35), um die erste und zweite optische Oberfläche zu erhalten;
- Additives Fertigen (113) der dauerhaften technischen Markierungen (24) durch die Aufbringung, beim Aufbringen einer Mehrzahl von den ersten Volumenelementen aus dem ersten Material (35), wenigstens eines zweiten vorbestimmten Volumenelements aus einem zweiten Material mit einem zweiten komplexen Brechungsindex (30, 31), der sich vom ersten komplexen Brechungsindex des ersten Materials (35) unterscheidet;
mit dem Verfahren, das so ausgebildet ist, dass die dauerhaften technischen Markierungen (24) für ein optisches Bezugssystem charakteristisch sind, mit dem die ophthalmische Linse (12) zu versehen ist, und sich in der ophthalmischen Linse (12) in einer bestimmten Position befinden, die von der ersten und zweiten optischen Oberfläche abhängt.

2. Verfahren nach Anspruch 1, **dadurch gekennzeichnet, dass** der Schritt des additiven Fertigens (100) einen Schritt des Bestimmens einer Fertigungsvorgabe der ophthalmischen Linse (12) umfasst, die geometrische Eigenschaften des Körpers (29) und der ersten und zweiten Seite (20, 28) und geometrische Eigenschaften der dauerhaften technischen Markierungen (24) enthält, die von den geometrischen Eigenschaften des Körpers (29) und der ersten und zweiten Seite (20, 28) und von dem ersten komplexen Brechungsindex abhängen.

3. Verfahren nach Anspruch 2, **dadurch gekennzeichnet, dass** die bestimmte Position und die geometrischen Eigenschaften der dauerhaften technischen Markierungen (24) vom Abstand, null oder ungleich null, abhängen, der sie von der ersten und zweiten Seite (20, 28) trennt.

4. Verfahren nach einem der Ansprüche 1 bis 3, **dadurch gekennzeichnet, dass** der Schritt des additiven Fertigens (113) der dauerhaften technischen Markierungen (24) durch Aufbringung einer Mehrzahl von den ersten Volumenelementen aus dem ersten Material (35) bei der additiven Fertigung wenigstens des Körpers (29) der ophthalmischen Linse (12) durchgeführt wird.

5. Verfahren nach Anspruch 4, **dadurch gekennzeichnet, dass** die dauerhaften technischen Markierungen (24) im Körper (29) der ophthalmischen Linse (12) möglichst nahe an wenigstens einer von der ersten und zweiten Seite (20, 28) der ophthalmischen Linse (12) ausgebildet sind.

6. Verfahren nach einem der Ansprüche 1 bis 3, **dadurch gekennzeichnet, dass** der Schritt des additiven Fertigens (113) der dauerhaften technischen Markierungen (21-24) durch Aufbringung einer Mehrzahl von den ersten Volumenelementen aus dem ersten Material (35) bei der additiven Fertigung wenigstens einer von der ersten und zweiten Seite (20, 28) der ophthalmischen Linse (12) durchgeführt wird.

7. Verfahren nach einem der Ansprüche 1 bis 6, **dadurch gekennzeichnet, dass** die dauerhaften technischen Markierungen (24) wenigstens möglichst nahe an einer von der ersten Seite (20) oder der zweiten Seite (28) der ophthalmischen Linse (12), die die stärkste Progressionsvariation aufweist, ausgebildet sind.

8. Verfahren nach einem der Ansprüche 1 bis 7, **dadurch gekennzeichnet, dass** der Schritt des additiven Fertigens (113) der dauerhaften technischen Markierungen (24) durch Aufbringung durch Überlagerung einer Mehrzahl von den ersten Volumenelementen aus dem ersten Material (35) durchgeführt wird.

9. Verfahren nach einem der Ansprüche 1 bis 8, **dadurch gekennzeichnet, dass** das erste Material (35) und das zweite Material (30, 31) so ausgebildet sind, dass die Differenz zwischen dem ersten komplexen Brechungsindex des ersten Materials (35) und dem zweiten komplexen Brechungsindex des zweiten Materials (30, 31) detektierbar ist.

10. Verfahren nach einem der Ansprüche 1 bis 9, **dadurch gekennzeichnet, dass** es einen Schritt (100) des Bereitstellens einer Fertigungsdatei aufweist, die für eine Geometrie des Körpers (29) und der ersten und zweiten Seite (20, 28) sowie der dauerhaften technischen Markierungen (24) der ophthalmischen Linse (12) charakteristisch ist; mit den geometrischen Eigenschaften der dauerhaften technischen Markierungen (24), die von den geometrischen Eigenschaften des Körpers (29) und der ersten und zweiten Seite (20, 28) und von dem ersten komplexen Brechungsindex abhängen.

11. Verfahren nach einem der Ansprüche 1 bis 10, **dadurch gekennzeichnet, dass** es einen Schritt des Polierens wenigstens einer der ersten und zweiten Seite (20, 28) der ophthalmischen Linse (12) aufweist.

12. Additive Fertigungsmaschine, **dadurch gekennzeichnet, dass** sie dazu ausgebildet ist, eine ophthalmische Linse (12) herzustellen, die einen Körper (29), eine erste Seite (20) und eine zweite Seite (28) gegenüber der ersten Seite (20) aufweist, wobei die erste Seite (20) und die zweite Seite (28) eine erste optische Oberfläche bzw. eine zweite optische Oberfläche definieren, und mit dauerhaften technischen Markierungen (24) versehen ist, indem das Verfahren nach einem der Ansprüche 1 bis 11 durchgeführt wird, wobei die additive Fertigungsmaschine (1) Folgendes aufweist:
ein Mittel zur additiven Fertigung (110-112) des Körpers (29) und der gegenüberliegenden ersten und zweiten Seite (20, 28) durch die Aufbringung einer Mehrzahl von ersten vorbestimmten Volumenelementen aus einem ersten Material mit einem ersten komplexen Brechungsindex (35), um die erste und zweite optische Oberfläche zu erhalten; und zur additiven Fertigung (113) der dauerhaften technischen Markierungen (24) durch die Aufbringung, beim Aufbringen einer Mehrzahl von den ersten Volumenelementen aus dem ersten Material (35), wenigstens eines zweiten vorbestimmten Volumenelements aus einem zweiten Material mit einem zweiten komplexen Brechungsindex (30, 31), der sich vom ersten komplexen Brechungsindex des ersten Materials (35) unterscheidet;
ein Steuermittel, das dazu ausgebildet ist, für Folgendes das Mittel zur additiven Fertigung zu steuern:
a) Additives Fertigen (110-112) des Körpers (29) und der gegenüberliegenden ersten und zweiten Seite (20, 28) durch die Aufbringung einer Mehrzahl von ersten vorbestimmten Volumenelementen aus einem ersten Material mit einem ersten komplexen Brechungsindex (35), um die erste und zweite optische Oberfläche zu erhalten;
b) Additives Fertigen (113) der dauerhaften technischen Markierungen (24) durch die Aufbringung, beim Aufbringen einer Mehrzahl von den ersten Volumenelementen aus dem ersten Material (35), wenigstens eines zweiten vorbestimmten Volumenelements aus einem zweiten Material mit einem zweiten komplexen Brechungsindex (30, 31), der sich vom ersten komplexen Brechungsindex des ersten Materials (35) unterscheidet; wobei die technischen Markierungen (24) für ein optisches Bezugssystem charakteristisch sind, mit dem die ophthalmische Linse (12) zu versehen ist, und sich in der ophthalmischen Linse (12) in einer bestimmten Position befinden, die von der ersten und zweiten optischen Oberfläche abhängt.

## Claims

1. Method for manufacturing an ophthalmic lens (12), comprising a marking step for producing permanent technical marks (24) on said ophthalmic lens (12), which exhibits a body (29), a first face (20) and a second face (28) opposite said first face (20), which first face (20) and second face (28) respectively define a first optical surface and a second optical surface; said method comprising the following steps:
- additively manufacturing (110-112) said body (29) and said first and second faces (20, 28) by the deposition of a plurality of first predetermined volume elements of a first material having a first complex refractive index (35), so as to obtain said first and second optical surfaces;
- additively manufacturing (113) said permanent technical marks (24) by the deposition, during said deposition of a plurality of said first volume elements of said first material (35), of at least one second predetermined volume element of a second material having a second complex refractive index (30, 31) different from said first complex refractive index of said first material (35);
with said method being configured such that the permanent technical marks (24) are characteristic of an optical reference system to be applied to said ophthalmic lens (12) and located in said ophthalmic lens (12) in a determined position depending on said first and second optical surfaces.

2. Method according to Claim 1, **characterized in that** said additive manufacturing step (100) comprises a step of determining a manufacturing specification for said ophthalmic lens (12), comprising geometric characteristics of said body (29) and of said first and second faces (20, 28) and geometric characteristics of said permanent technical marks (24) that depend on said geometric characteristics of said body (29) and of said first and second faces (20, 28) and on said first complex refractive index.

3. Method according to Claim 2, **characterized in that** said determined position and said geometric characteristics of said permanent technical marks (24) depend on the distance, zero or non-zero, separating them from said first and second faces (20, 28).

4. Method according to any one of Claims 1 to 3, **characterized in that** said step of additively manufacturing (113) said permanent technical marks (24) is carried out upon the deposition of a plurality of said first volume elements of said first material (35) during the additive manufacture at least of said body (29) of said ophthalmic lens (12).

5. Method according to Claim 4, **characterized in that** said permanent technical marks (24) are produced in said body (29) of said ophthalmic lens (12), as close as possible to at least one of said first and second faces (20, 28) of said ophthalmic lens (12).

6. Method according to any one of Claims 1 to 3, **characterized in that** said step of additively manufacturing (113) said permanent technical marks (21-24) is carried out upon the deposition of a plurality of said first volume elements of said first material (35) during the additive manufacture at least of one of said first and second faces (20, 28) of said ophthalmic lens (12) .

7. Method according to any one of Claims 1 to 6, **characterized in that** said permanent technical marks (24) are produced at least as close as possible to a face of said ophthalmic lens (12), from among said first face (20) or said second face (28), which exhibits the greatest progression variation.

8. Method according to any one of Claims 1 to 7, **characterized in that** said step of additively manufacturing (113) said permanent technical marks (24) is carried out upon the deposition by superposition of a plurality of said first volume elements of said first material (35).

9. Method according to any one of Claims 1 to 8, **characterized in that** said first material (35) and said second material (30, 31) are configured in such a way that the difference between said first complex refractive index of said first material (35) and said second complex refractive index of said second material (30, 31) is detectable.

10. Method according to any one of Claims 1 to 9, **characterized in that** it comprises a step (100) of providing a manufacturing file characteristic of a geometry of said body (29) and of said first and second faces (20, 28) as well as said permanent technical marks (24) of said ophthalmic lens (12); with said geometric characteristics of said permanent technical marks (24) that depend on said geometric characteristics of said body (29) and of said first and second faces (20, 28) and on said first complex refractive index.

11. Method according to any one of Claims 1 to 10, **characterized in that** it comprises a step of polishing at least one of said first and second faces (20, 28) of said ophthalmic lens (12).

12. Additive manufacturing machine, **characterized in that** it is configured to produce an ophthalmic lens (12) exhibiting a body (29), a first face (20) and a second face (28) opposite said first face (20), which first face (20) and second face (28) respectively define a first optical surface and a second optical surface, and being provided with permanent technical marks (24) by implementing said method according to any one of Claims 1 to 11, the additive manufacturing machine (1) comprising:
a means for additively manufacturing (110-112) said body (29) and said opposing first and second faces (20, 28) by the deposition of a plurality of first predetermined volume elements of a first material having a first complex refractive index (35), so as to obtain said first and second optical surfaces; and for additively manufacturing (113) said permanent technical marks (24) by the deposition, during said deposition of a plurality of said first volume elements of said first material (35), of at least one second predetermined volume element of a second material having a second complex refractive index (30, 31) different from said first complex refractive index of said first material (35);
a control means configured to control the additive manufacturing means so as to:
a) additively manufacture (110-112) said body (29) and said opposing first and second faces (20, 28) by the deposition of a plurality of first predetermined volume elements of a first material having a first complex refractive index (35), so as to obtain said first and second optical surfaces;
b) additively manufacture (113) said permanent technical marks (24) by the deposition, during said deposition of a plurality of said first volume elements of said first material (35), of at least one second predetermined volume element of a second material having a second complex refractive index (30, 31) different from said first complex refractive index of said first material (35); the permanent technical marks (24) being characteristic of an optical reference system to be applied to said ophthalmic lens (12) and located in said ophthalmic lens (12) in a determined position depending on said first and second optical surfaces.
